# EUROPÄISCHE PATENTANMELDUNG

(11) **EP 1 270 846 A2**
(43) Veröffentlichungstag der Anmeldung: **02.01.2003**
(21) Anmeldenummer: 02013303.9
(22) Anmeldetag: 18.06.2002
(51) Int. Cl.: E04H 6/02

(54) **Fertiggarage**

(30) Priorität: 22.06.2001 DE 10129681
(71) Anmelder: Sambel, Philipp, 60386 Frankfurt am Main (DE)
(72) Erfinder: Sambel, Philipp, 60386 Frankfurt am Main (DE)
(74) Vertreter: KEIL & SCHAAFHAUSEN

(57) **Zusammenfassung**

Es wird eine Fertiggarage (1) mit einem Bodenelement (4), einem Dachelement (3) und wenigstens einem Wandelement (5) beschrieben, bei der das Wandelement eine Einfahröffnung (6) aufweist, die durch ein Tor (8) verschließbar ist. Um eine Fertiggarage (12) zu schaffen, die bei kleinen äußeren Abmaßen einen möglichst großen Raum zum Einstellen eines Fahrzeugs zur Verfügung stellt und dabei auch noch ein besonders ansehnliches Aussehen aufweist, wird vorgeschlagen, dass das Wandelement (5) der Fertiggarage (1) zylinderförmig ausgebildet ist und einen abgerundeten Grundriss aufweist, dass die Krümmung des Tors (8) zum Verschließen der Einfahröffnung (6) der Krümmung des Wandelements (5) im Bereich der Einfahröffnung (6) angepasst ist und dass das Bodenelement (4), das Wandelement (5) und das Dachelement (3) den entsprechenden Teilen einer Blechdose nachgebildet sind.

## Beschreibung

Die Erfindung betrifft eine Fertiggarage, insbesondere für Kraftfahrzeuge, mit einem Bodenelement, einem Dachelement und wenigstens einem Wandelement, das eine Einfahröffnung aufweist, die durch ein Tor verschließbar ist.

Fertiggaragen sind in unterschiedlichen Ausgestaltungen bekannt. Diese werden häufig als rechteckförmige Baueinheiten in Beton vorgefertigt und zu dem vorgesehenen Standort verbracht. Baustellenseitig ist ein tragfähiges Fundament vorzusehen, auf dem die Fertiggarage abgesetzt und fest verankert werden kann. Da die bekannten Fertiggaragen häufig aus einfachen Betonplatten hergestellt werden, sehen sie meistens recht unansehnlich aus.

Aufgabe der Erfindung ist es daher, eine Fertiggarage zu schaffen, die bei kleinen äußeren Abmaßen einen möglichst großen Raum zum Einstellen eines Fahrzeugs zur Verfügung stellt und dabei auch noch ein besonders ansehnliches Aussehen aufweist.

Die Aufgabe wird erfindungsgemäß im Wesentlichen dadurch gelöst, dass das Wandelement der Fertiggarage zylinderförmig ausgebildet ist und einen abgerundeten Grundriss aufweist, dass die Krümmung des Tors zum Verschließen der Einfahröffnung der Krümmung des Wandelementes im Bereich der Einfahröffnung angepasst ist und dass das Bodenelement, das Wandelement und das Dachelement den entsprechenden Teilen einer Blechdose nachgebildet sind. Eine derartige Fertiggarage ist einfach herstellbar, erfordert nur minimalen Stellplatz und das nicht in den Innenraum der Fertiggarage hineinragende Tor verkleinert den nutzbaren Einstellraum nicht. Auch kann ein Fundament entfallen, was die Kosten für die Garage deutlich senkt, und eine flexible Anordnung der Garage erlaubt.

Gemäß vorteilhaften Ausgestaltungen der Erfindung kann das Bodenelement einen kreisrunden, einen elliptischen oder einen einem Rechteck oder einem Quadrat angenäherten Grundriss aufweisen. Damit wird eine sich von der herkömmlichen "Plattenbauweise" unterscheidende Faltgarage geschaffen, die auch bei geringem Platzangebot eingesetzt werden kann.

Es hat sich als vorteilhaft erwiesen, das Tor als Schiebetor auszubilden. Ein solches lässt sich einfach bedienen, ohne dass im Bereich der Einfahröffnung ein zusätzlicher Platzbedarf benötigt wird.

Das Schiebetor lässt sich besonders einfach bewegen, wenn am oberen Rand der Einfahröffnung eine Führungsschiene angeordnet ist, in die das Schiebetor mit entsprechenden Gegenstücken eingreift. Die Führungsschiene kann aber auch am Bodenelement angeordnet sein. Um eine verkantungsfreie Führung zu ermöglichen, hat es sich als vorteilhaft erwiesen, sowohl am oberen Randbereich des Wandelementes bzw. des Dachelementes als auch am Bodenelement Führungsschienen vorzusehen.

Gemäß einer weiteren Ausführungsform der Erfindung kann das Tor auch als Schwenktor ausgebildet sein. In diesem Fall ist mindestens ein scharnierförmiges Führungsmittel für das Schwenktor an dem Wandelement angeordnet.

Um eine möglichst große Öffnung in dem dosenförmigen Wandelement zu erhalten, ohne dass deshalb das Schiebetor bzw. das Schwenktor zu groß werden und diese wegen des damit verbundenen erheblichen Gewichtes nur noch schwer handhabbar werden, können die Tore erfindungsgemäß aus mehreren Torsegmenten bestehen, die relativ zu dem Wandelement verschiebbar bzw. verschwenkbar angeordnet sind.

Für das Öffnen des Tors kann zweckmäßigerweise ein motorischer Antrieb vorgesehen sein, der mittels einer Fernbedienung betätigbar ist. Die Fernbedienung umfasst einen garagenseitigen Empfänger und einen benutzerseitigen Sender.

Bei einer besonders bevorzugten und kostengünstigen Ausführungsform einer erfindungsgemäßen Fertiggarage bestehen die dosenförmigen Bauelemente und ggfls. auch das Tor aus Blech. Es kann auch ein Sandwichblech als Werkstoff zum Einsatz kommen. In beiden Fällen können ein oder mehrere der Bauelemente und/oder das Tor mit Verstärkungssicken versehen sein. Diese verleihen der Fertiggarage zudem das besondere Aussehen einer Blechdose, da sie als die vermeintlichen Rillen in den Seitenwänden üblicher Blechdosen wahrgenommen werden.

Gemäß einer weiteren Ausgestaltung der Erfindung kann als Werkstoff für ein oder mehrere der Bauelemente auch verkleideter Stahlbeton zum Einsatz kommen, wobei die Verkleidung aus Blech, Kunststoff, Holz oder einem sonstigen geeigneten Material besteht. Diese ist nicht nur kostengünstig herzustellen, sondern sie liefert auch einen zusätzlichen Schutz gegen äußere Einflüsse.

Um auch einem mit der ungewöhnlichen Garagenform noch nicht besonders vertrauten Fahrer das einfache Einstellen eines Fahrzeugs in die Fertiggarage zu ermöglichen, können auf dem Bodenelement Führungs- und/oder Haltemitteln für die Räder des Fahrzeugs aufgebracht sein.

Die Erfindung wird nachfolgend anhand von Ausführungsbeispielen näher erläutert, die in der Zeichnung dargestellt sind.

Es zeigen:
- Fig. 1: eine perspektivische Ansicht einer erfindungsgemäßen Fertiggarage mit teilweise geöffnetem Schiebetor und einem davor haltenden, einfahrbereiten Kraftfahrzeug,
- Fig. 2: die in Figur 1 gezeigte Fertiggarage mit geöffnetem Tor und dem in die Fertiggarage einfahrenden Fahrzeug und
- Fig. 3: eine Fig. 2 entsprechende Darstellung einer zweiten Ausführungsform einer erfindungsgemäßen Fertiggarage mit einem schwenkbar angelenktem Tor.

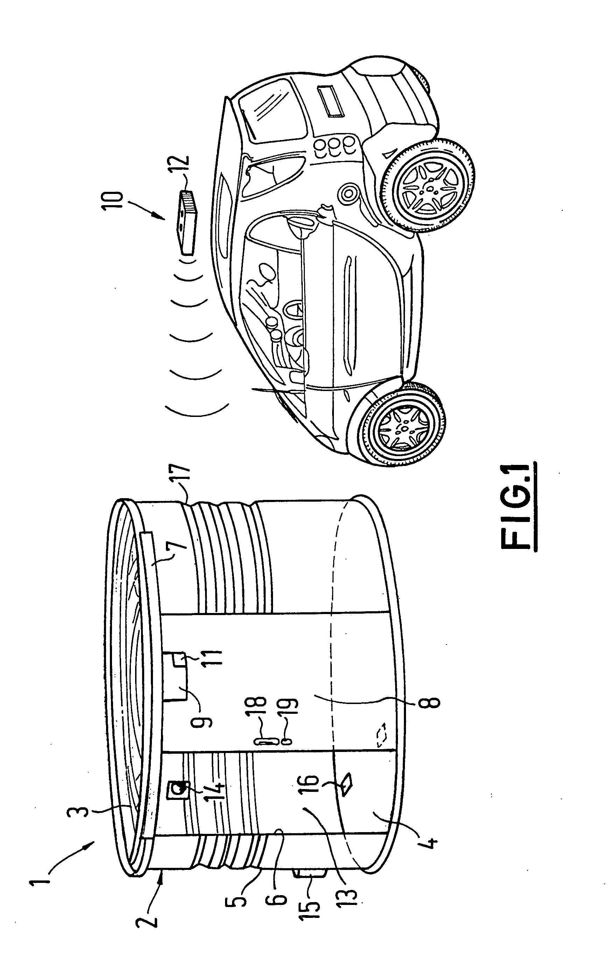

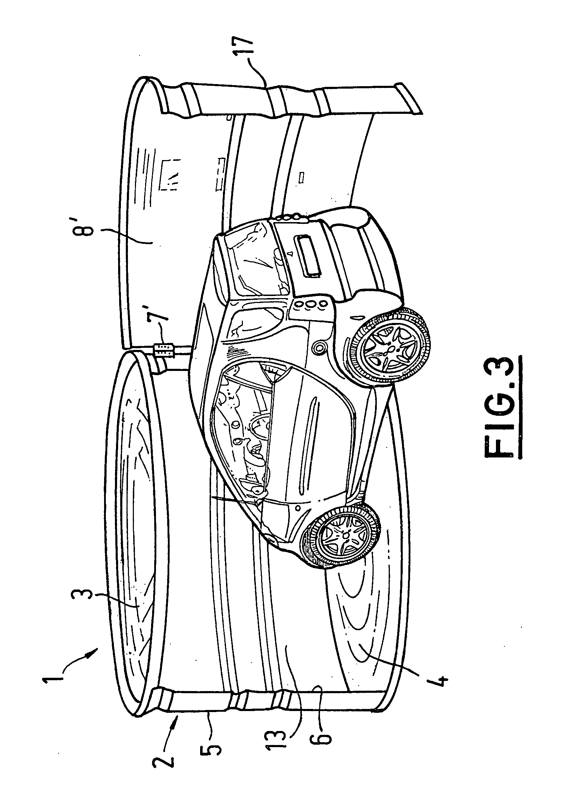

Die in den Figuren dargestellte Fertiggarage 1 besteht im Wesentlichen aus Bauelementen 2, die dem Aussehen einer Blechdose nachgebildet sind. So weisen das Dachelement 3, das Bodenelement 4 und das runde Wandelement 5 der Fertiggarage 1 die charakteristischen Formelemente der entsprechenden Teile einer Blechdose auf. Sie können aus Blech, aus Beton oder einem sonstigen geeigneten Material bestehen, wobei für den Fall, dass die Bauelemente 2 der Fertiggarage 1 nicht aus Blech bestehen, die Fertiggarage das für sie wesentliche Aussehen einer Blechdose durch eine entsprechende Verkleidung erhält. Diese kann nun wieder aus Blech, Kunststoff oder Holz bestehen. Das Wandelement 5 weist eine Einfahröffnung 6 auf, die entweder durch ein Schiebetor 8 (Fig. 1) oder durch ein Schwenktor 8' (Fig. 3) verschließbar ist.

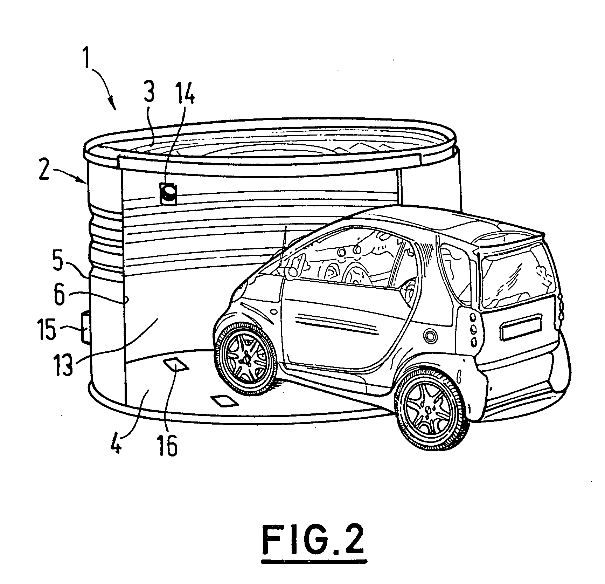

Das in den Fig. 1 und 2 gezeigte Schiebetor 8 ist an am oberen Rand der Einfahröffnung 6 angeordneten Führungsschienen 7 parallel und relativ zu dem Wandelement 5 verschiebbar angelenkt. Die Führungsschienen 7 sind entweder im oberen Randbereich des Wandelementes 5 an diesem befestigt, oder am Dachelement 3. Am Schiebetor 8 sind entsprechende Gegenstücke ausgebildet, die mit den Führungsschienen 7 in Eingriff bringbar sind. Zusätzlich zu den oberen Führungsschienen 7 können auch an dem Bodenelement 4 nicht näher dargestellte Führungselemente vorgesehen sein. Um ein verkantungsfreies Führen des Schiebetores 8 zu gewährleisten, wird dieses zweckmäßigerweise sowohl oben als auch unten geführt.

In Fig. 3 ist eine ähnliche Fertiggarage wie in den Fig. 1 und 2 dargestellt, so dass gleiche Teile mit gleichen Bezugsziffern versehen sind. Der Unterschied der in Fig. 3 gezeigten Fertiggarage 1 besteht darin, dass anstatt eines Schiebetores 8 ein Schwenktor 8' vorgesehen ist. Dieses ist mittels scharnierartiger Führungsmittel 7' schwenkbar an einem Wandelement 5 angelenkt.

Um eine möglichst große Öffnung 6 in dem dosenförmigen Wandelement 4 zu erhalten, ohne dass deshalb das Schiebetor 8 bzw. das Schwenktor 8' zu groß werden und diese wegen des damit verbundenen erheblichen Gewichtes nur noch schwer zu bewegen sind, können die Tore 8, 8' aus mehreren Segmenten bestehen, die getrennt voneinander verschiebbar, verschwenkbar oder zusammenklappbar sind (nicht dargestellt).

Die in den Fig. 1 bis 3 dargestellten Fertiggaragen 1 weisen jeweils zylinderförmige Wandelemente 5 sowie kreisförmige Dachelemente 3 und Bodenelemente 4 auf. Die Boden- und Dachelemente können aber auch eine andere, beispielsweise eine ovale oder eine an ein Rechteck oder Quadrat angenäherte Grundform aufweisen, ohne dass dadurch der Kern der Erfindung verlassen wird. In allen Fällen bleibt das dosenförmige Aussehen der Fertiggarage 1 erhalten.

Sowohl das Schiebetor 8 als auch das Schwenktor 8' überdecken im geschlossenen Zustand die Öffnung 6 des Wandelementes 5 von außen. Dabei überlappt ein Randbereich der Tore 8 bzw. 8' jeweils einen Teil des Wandelementes 5. Weil damit das geöffnete Tor 8 bzw. 8' nicht in das Innere der Garage hineinragt, verkleinert es auch nicht dessen nutzbaren Innenraum 13.

Zur einfacheren Handhabung der Tore 8 bzw. 8' ist ein Elektroantrieb 9 vorgesehen. Dessen Bedienung erfolgt zweckmäßigerweise mit einer Fernbedienung 10, die einen garagenseitigen Empfänger 11 und einen benutzerseitigen Sender 12 aufweist. Um die Tore 8 bzw. 8' auch manuell bedienen zu können, ist an diesen ein Betätigungsgriff 18, und zum Abschließen der Garage eine Schließvorrichtung 19 angebracht. Im Inneren 13 der Fertiggarage 1 ist eine Beleuchtungseinrichtung 14 vorgesehen, die mit dem Anschlussterminal 15 des elektrischen Anschlusses der Fertiggarage 1 verbunden ist.

Am Bodenelement 4 der Fertiggarage 1 sind Führungs- und/oder Haltemittel 16 ausgebildet, die das Einstellen eines Kraftfahrzeugs erleichtern. Damit wird auch einer Beschädigung des Wandelementes 5 entgegengewirkt, was insbesondere bei Fahrern mit noch nicht ausreichender Erfahrung beim Einparken in die dosenförmige Garage zu befürchten ist. Die Führungs- oder Haltemittel 16 lassen sich auf die Spurweite bzw. den Achsabstand eines Kraftfahrzeuges einstellen. Damit kann eine Anpassung an unterschiedliche Fahrzeugtypen vorgenommen werden.

Die typischen Rillen in den Seitenwänden von Blechdosen lassen sich bei Fertiggaragen 1, die aus Blech bestehen, dahingehend nachempfinden, dass in den Wandelementen 5 Verstärkungssicken 17 eingeprägt sind. Mit diesen wird auch eine zusätzliche Verstärkung der Fertiggarage erreicht.

Die Verwendung von Blech als Werkstoff für die dosenförmigen Bauelemente 2 der Fertiggarage 1 erlaubt eine einfache und sichere Verbindung der einzelnen Bauelemente 2 mittels herkömmlicher umformtechnischer Präge- und/oder Bördelverfahren. Die Verwendung von Blech als Werkstoff ermöglicht zudem eine kostengünstige Herstellung.

## Patentansprüche

1. Fertiggarage, insbesondere für Kraftfahrzeuge, mit einem Bodenelement (4), einem Dachelement (3) und wenigstens einem Wandelement (5), das eine Einfahröffnung (6) aufweist, die durch ein Tor (8, 8') verschließbar ist, **dadurch gekennzeichnet, dass** das Wandelement (5) der Fertiggarage (1) zylinderförmig ausgebildet ist und einen abgerundeten Grundriss aufweist, dass die Krümmung des Tors (8, 8') zum Verschließen der Einfahröffnung (6) der Krümmung des Wandelements (5) im Bereich der Einfahröffnung (6) angepasst ist und dass das Bodenelement (4), das Wandelement (5) und das Dachelement (3) den entsprechenden Teilen einer Blechdose nachgebildet sind.

2. Fertiggarage nach Anspruch 1, **dadurch gekennzeichnet, dass** das Bodenelement (4) einen kreisrunden Grundriss aufweist.

3. Fertiggarage nach Anspruch 1, **dadurch gekennzeichnet, dass** das Bodenelement (4) einen elliptischen Grundriss aufweist.

4. Fertiggarage nach Anspruch 1, **dadurch gekennzeichnet, dass** das Bodenelement (4) einen einem Rechteck oder einem Quadrat angenäherten Grundriss mit abgerundeten Kanten aufweist.

5. Fertiggarage nach einem der Ansprüche 1 bis 4, **dadurch gekennzeichnet, dass** das Tor als Schiebetor (8) ausgebildet ist .

6. Fertiggarage nach einem der Ansprüche 1 bis 5, **dadurch gekennzeichnet, dass** mindestens eine Führungsschiene (7) für das Schiebetor (8) am oberen Rand der Einfahröffnung (6) angeordnet ist.

7. Fertiggarage nach einem der Ansprüche 1 bis 6, **dadurch gekennzeichnet, dass** mindestens ein Führungselement für das Schiebetor (8) am Bodenelement (4) angeordnet ist.

8. Fertiggarage nach einem der Ansprüche 1 bis 4, **dadurch gekennzeichnet, dass** das Tor als Schwenktor (8') ausgebildet ist.

9. Fertiggarage nach einem der vorhergehenden Ansprüche, **dadurch gekennzeichnet, dass** mindestens ein scharnierförmiges Führungsmittel (7') für das Schwenktor (8') an dem Wandelement (5) angeordnet ist.

10. Fertiggarage nach einem der vorhergehenden Ansprüche, **dadurch gekennzeichnet, dass** das Tor (8, 8') mehrere Torsegmente aufweist, die relativ zu dem Wandelement (5) verschiebbar bzw. verschwenkbar angeordnet sind.

11. Fertiggarage nach einem der vorhergehenden Ansprüche, **dadurch gekennzeichnet, dass** ein motorischer Antrieb (9) für das Tor (8, 8') vorgesehen ist, der mittels einer Fernbedienung (10) betätigbar ist, wobei die Fernbedienung (10) einen garagenseitigen Empfänger (11) und einen benutzerseitigen Sender (12) umfasst.

12. Fertiggarage nach einem der vorhergehenden Ansprüche, **dadurch gekennzeichnet, dass** die dosenförmigen Bauelemente (2) und/oder das Tor (8, 8') aus Blech bestehen.

13. Fertiggarage nach einem der vorhergehenden Ansprüche, **dadurch gekennzeichnet, dass** ein oder mehrere der Bauelemente (2) und/oder das Tor (8, 8') aus einem Sandwichblech bestehen.

14. Fertiggarage nach einem der vorhergehenden Ansprüche, **dadurch gekennzeichnet, dass** ein oder mehrere der Bauelemente (2) und/oder das Tor (8, 8') mit Verstärkungssicken (17) versehen sind.

15. Fertiggarage nach einem der vorhergehenden Ansprüche, **dadurch gekennzeichnet, dass** ein oder mehrere der Bauelemente (2) aus verkleidetem Stahlbeton bestehen, wobei die Verkleidung aus Blech, Kunststoff, Holz oder einem sonstigen geeigneten Material besteht.

16. Fertiggarage nach einem der vorhergehenden Ansprüche, **dadurch gekennzeichnet, dass** auf dem Bodenelement (4) Führungs- und/oder Haltemittel (16) für die Räder des Fahrzeugs ausgebildet ist.
